# EUROPEAN PATENT APPLICATION

(11) **EP 2 974 898 A1**
(43) Date of publication of application: **20.01.2016**
(21) Application number: 14398011.8
(22) Date of filing: 24.10.2014
(51) Int. Cl.: B60K 15/03

(54) **"HIGH PRESSURE FUEL TANK MANUFACTURED FROM HIGH-STRENGTH STEEL SHEETS OR ADVANCED HIGH-STRENGTH STEEL SHEETS WITH ORGANOMETALLIC COATING"**

(30) Priority: 14.07.2014 BR 102014017296
(71) Applicant: Aethra Sistemas Automotivos S/A, 32686-190 Minas Gerais (BR)
(72) Inventor: Sportelli, Pietro, 32686-190 Minas Gerais (BR)
(74) Representative: Pereira da Cruz, Joao

(57) **Abstract**

This invention patent covers a high pressure fuel tank (reservoir) (1) manufactured from high-strength "HSS" or "AHSS" steels with an organometallic surface coating, containing structural elements consisting of structural columns (2) internally fastened by quick couplers welded to the half-bodies, and structural bands (3) that have the same geometric shape as the external surface of the half-bodies and fastened to the tank edges by means of screws on such edges. Such fuel tank (1) contains also an internal fuel ventilation system with a continuous tube (4) interconnecting components, such as: fuel filling stop valves (5), intermediary liquid/vapor separator (6), vent valves (7 and 8), to secondary tube segments (9), as well as an outlet opening (10) connected to an appropriate tubing and linked to the fuel vapor treatment carbon canister system through the outlet opening (11).

## Description

This invention patent is related to the automotive industry, particularly the auto parts industry, and covers a high pressure fuel tank manufactured from high-strength steel "HSS" ("IF - Interstitial Free") sheets or advanced high-strength steel "AHSS" ("DP - Dual Phase, TRIP - Transformed Induced Plasticity", "TWIP - Twinning Induced Plasticity") sheets coatinged with organometallic coating, which provides high mechanical strength, good drawability properties, high fuel corrosion resistance, good weathering resistance and lower manufacturing cost due to the economic difference when compared to fuel tanks manufactured from polymer or steel with conventional coating.

In a typical hybrid electric vehicle powered by an electric motor with rechargeable battery (for example, a lithium ion battery) and an internal combustion "IC" engine with an alternative energy source (for example, gasoline or gasoil), the battery is recharged when the vehicle is connected to a power source (for example, conventional AC power supplied by an utility company).

In this kind of vehicle, called plug-in hybrid electric vehicle ("PHEV") or extended-range electric vehicles ("EREV"), the "IC" engine is engaged only in the case of long travels. Such intermittent use requires fuel to be stored on board the vehicle. In this case, the engine fuel (for example, gasoline) is stored in a fuel tank that is exposed to heating inside the vehicle, which raises the internal fuel vapor pressure (volatile hydrocarbon).

In the case of conventional "IC" engines, the fuel tank vapors (emissions), which typically comprises low molecular weight hydrocarbons, are vented into a fuel vapor treatment system (technically know as carbon canister) with a high surface area containing carbon granules in order to temporarily absorb such emissions. Therefore, during the "IC" engine operation, ambient air is aspirated through the carbon granule bed to remove the fuel adhered to the carbon granule surface and convey it to the "IC" engine ignition system.

Because hybrid electric vehicles are used mainly to short or local travels, the "IC" engine can remain off for a long period, which results in a considerable rise in the fuel tank internal pressure, which can be as high as 35 kPa.

Currently, fuel tanks of hybrid PHEV vehicles are required to afford the typical operating temperatures (up to 100°C) along with high operating pressure (35 kPa) / vacuum (-15 kPa) ranges. Such a combination of factors results in a reduction in the tank rigidity and excessive volumetric variation. Moreover, the association between high temperature and high pressure causes the creep phenomenon and/or failure in fuel tanks manufactured from plastic materials. The solutions typically adopted to mitigate the above-mentioned problems comprise the use of internal and/or external structural elements in the fuel tank. However, as a general rule, such devices make the assembling more difficult and increase the overall vehicle weight. In addition, one of the core operational considerations is the required space, which is extremely important, particularly in the case of cars. However, care must be taken to avoid increasing the occupied space, which would reduce the tank's useful capacity. As a consequence, there is an increase in the manufacturing cost, required time to assemble the component and evaporative emissions.

In view of the growing concern among organizations and public agencies about the environment, there is an increasing requirement to keep the level of fuel emission from the fuel tank at a minimum and to use as many recyclable parts as possible. The outcome of such a requirement is that nowadays fuel tanks manufacturers target a virtually zero fuel emission.

This patent is innovative in the sense that is presents a high pressure fuel reservoir manufactured from "HSS" or "AHSS" steels with an organometallic coating, including the use of internal and/or external structural elements in the fuel tank to afford the typical operating temperatures (up to 100°C) along with high operating pressure (35 kPa) / vacuum (-15 kPa) ranges. Moreover, the tank is impermeable and meets the strictest requirements in terms of evaporative fuel emissions, on top of being an ecologically correct product (100% recyclable).

The fuel tank is manufactured from high-strength "HSS" or "AHSS" steels with an organometallic surface coating, contains additional internal and external structural elements, and affords the typical operating temperatures, along with high working temperature and pressure/vacuum, a technique that was unknown before the issuance of this patent.

The fuel tank manufactured from high-strength "HSS" or "AHSS" steels with an organometallic coating covered by this patent of invention can be better understood by referring to the attached illustrations, which are an integral part of this report and contain numerical references, along with a description of the system's technical specificities. Such illustrations do not restrict the system's configuration in terms of its dimensions, proportions and eventual finishing types or the reach of its practical application.

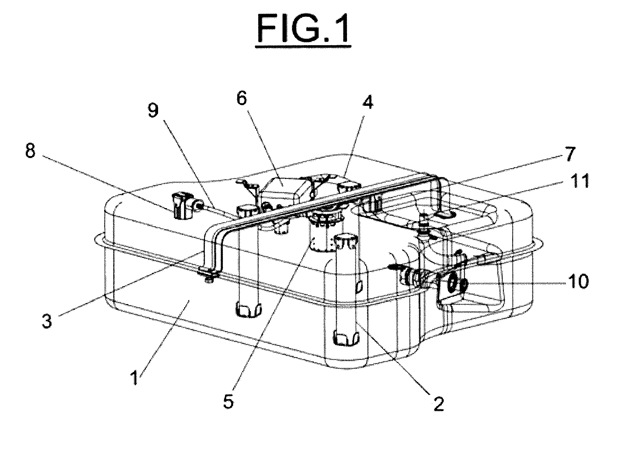

Figure 1 is an isometric view of a high pressure fuel tank (reservoir), drawn transparently to show the structural columns, cross bands and the internal integrated ventilation system.

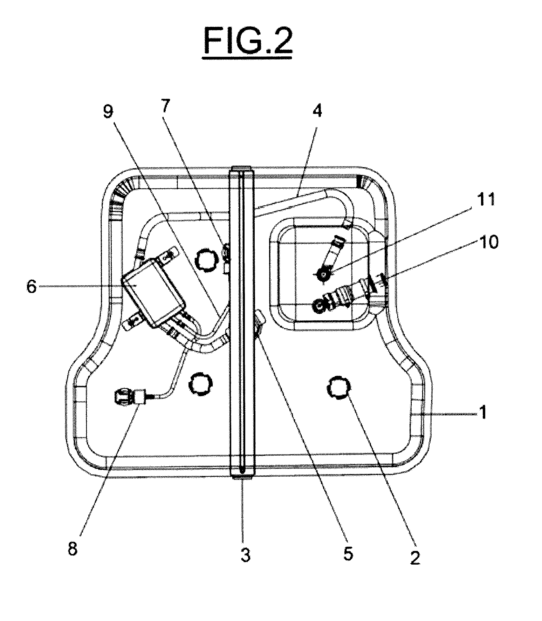

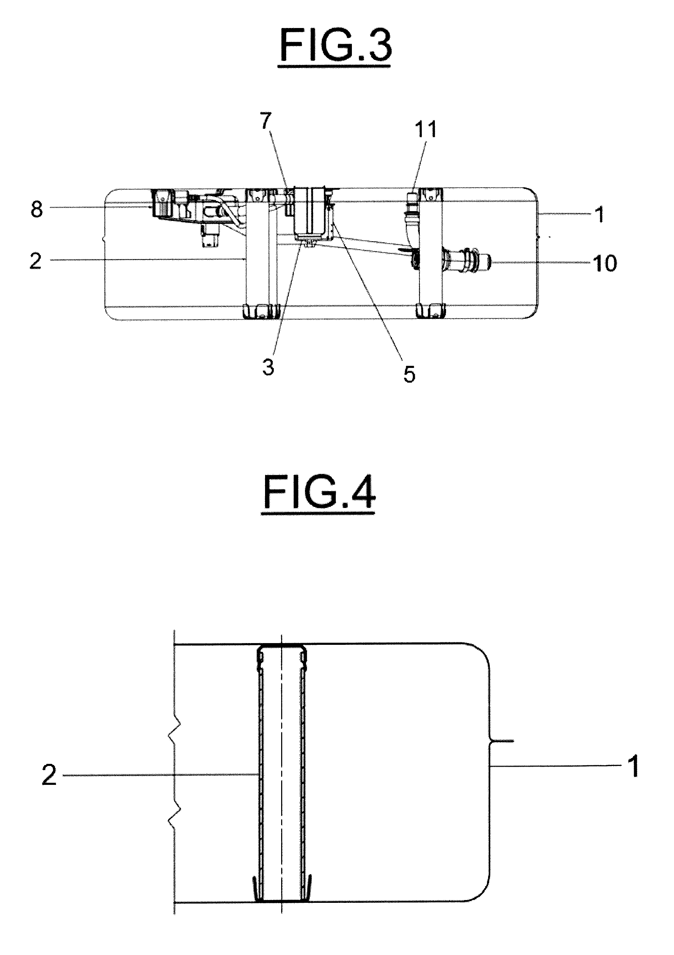

Figures 2 and 3 are the upper and side views of the fuel tank, also drawn transparently to show the same situation.
Figure 4 is a partial cross section of the tank, showing the cross section of one of the structural columns.

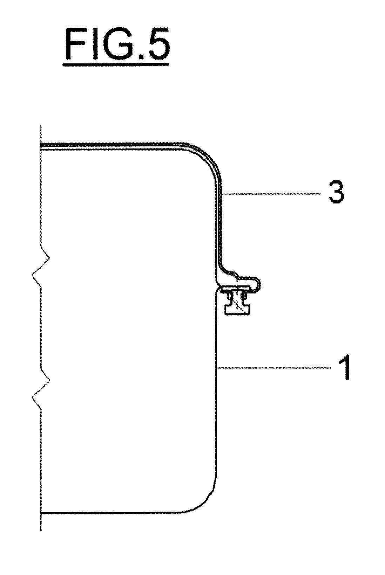

Figure 5 is a partial cross section of the tank, showing the cross section of the fastening device of one of the structural band ends.

According to these figures and their numerical references, this patent covers a fuel tank (reservoir) manufactured from "HSS" or "AHSS" steel with an organometallic coating, provided with two extensions in the rear part suitable for assembly in a vehicle, as is known in the art.

Such fuel tank (reservoir) manufactured from "HSS" or "AHSS" steels, with an organometallic coating, - contains internal and/or external structural elements, intended to minimize the displacements caused by negative pressure, consisting of structural columns (2) inside the tank and fastened by quick couplers welded to the half-bodies, to generate a reaction force against the compression stresses applied on the two half-bodies as a result of the negative pressure inside the reservoir.

Fuel tank (1) manufactured from "HSS" or "AHSS" steels, with an organometallic coating, and containing structural bands (3) manufactured from high mechanical strength materials ("DP" and "TRIP" steels, among others) in order to reduce the stresses arising out of positive pressures. Such structural bands (3) have the same geometric shape as the external surface of the half-bodies and are located in critical places with an aim to restrain the excessive displacement due to the volumetric expansion of the two half-bodies as a result of the positive pressure inside the fuel tank (1). These bands are fastened to the tank edges by means of screws on such edges, which compress the packing material (nylon) on the tank edges. In special circumstances, such fastening can be made by means of alternative methods.

Such fuel tank (1) contains an internal integrated ventilation system that comprises a continuous tube (4) made from rigid plastic, which can also be flexible or resilient, following the inside shape of the fuel tank (1) and interconnecting the fuel vapor components, such as: fuel filling stop valves (5), intermediary liquid/vapor separator (6) and vent valves (7 and 8), which are connected to the intermediary liquid/vapor separator (6) through secondary tube segments (9). In these valves, the fuel is fed through a fuel feeding valve (10), a flow check valve that allows the fuel to flow in just one direction in order to avoid fuel backflow toward the filler neck (not shown in the drawings) when the fuel tank (1) reaches its maximum capacity.

The above-mentioned continuous tube (4) starts from the filling stop valve (5), passes through the intermediary liquid/vapor separator (6) and runs toward an outlet opening (11) located in the upper wall of the fuel tank (1), which is connected to an appropriate tubing (not shown) linked to the fuel vapor treatment carbon canister system (not shown), as is known in the art.

In practical terms, this patent presents a solution that results in lower manufacturing and component assembling costs, reduces the evaporative emissions and is an ecologically correct product.

## Claims

1. High pressure fuel tank manufactured from high-strength steel sheets or advanced high-strength steel sheets with organometallic coating **characterized by** a high pressure fuel tank (reservoir) (1) manufactured from high-strength steel "HSS" ("IF - Interstitial Free") sheets or advanced high-strength steel "AHSS" ("DP - Dual Phase, TRIP - Transformed Induced Plasticity", "TWIP - Twinning Induced Plasticity") sheets coatinged with organometallic coating, containing internal and/or external structural elements consisting of structural columns (2) internally fastened by quick couplers welded to the half-bodies; containing also structural bands (3) manufactured from high mechanical strength materials ("DP" and "TRIP" steels, among others) that have the same geometric shape as the external surface of the half-bodies and are located in critical places and fastened to the tank edges by means of screws on such edges, which compress the packing material (nylon) on the tank edges; in special circumstances, such fastening can be made by means of alternative methods.

2. High pressure fuel tank manufactured from high-strength steel sheets or advanced high-strength steel sheets with organometallic coating according to claim 1, **characterized by** an internal fuel ventilation system with a continuous tube (4) interconnecting components such as: fuel filling stop valves (5), intermediary liquid/vapor separator (6) and vent valves (7 and 8), which are connected to secondary tube segments (9).

3. High pressure fuel tank manufactured from high-strength steel sheets or advanced high-strength steel sheets with organometallic coating according to claim 2, **characterized by** a continuous tube (4) interconnecting the fuel filling stop valves (5), intermediary liquid/vapor separator (6) up to the outlet opening (10) located in the upper wall of the fuel tank (1), which is connected to a tubing linked to the fuel vapor treatment carbon canister system.

4. High pressure fuel tank manufactured from high-strength steel sheets or advanced high-strength steel sheets with organometallic coating according to claim 3, **characterized by** a continuous tube (4), vent valves (7 and 8) connected to the intermediary liquid/vapor separator (6) through secondary tube segments (11) and externally fastened to the continuous tube (4) by means of safe fittings; they are located, along with the fuel filling valve (5), in the highest part of the fuel tank (1), with the holes unlocked.
